# EUROPEAN PATENT SPECIFICATION

(11) **EP 2 578 538 B1**
(45) Date of publication and mention of the grant of the patent: **04.11.2015**
(21) Application number: 12152025.8
(22) Date of filing: 22.01.2012
(51) Int. Cl.: C01G 43/00, C01G 99/00, C01F 15/00

(54) **A selective extraction of uranium and Protactinium from material containing thorium**
Eine selektive Extraktion von Uran und Protactinium aus Thoriumhaltigen Material
Une extraction sélective de l'uranium et du Protactinium d'une matière contenant du thorium

(30) Priority: 06.10.2011 PL 39656411
(43) Date of publication of application: 10.04.2013
(73) Proprietor: Instytut Chemii i Techniki Jadrowej, 03-195 Warszawa (PL)
(72) Inventor: Kalbarczyk, Pawel, 05-870 Blonie (PL); Polkowska-Motrenko, Halina, 05-250 Laki (PL); Chajduk, Ewelina, 96-300 Zyrardów (PL)
(74) Representative: Brodowska, Iwona

(56) References cited:
- US-A- 343 809
- US-A- 2 789 878
- US-A- 3 227 516
- US-A- 3 825 649
- M. SOLACHE-RIOS: "Separation of protactinium from carnotite", JOURNAL OF RADIOANALYTICAL AND NUCLEAR CHEMISTRY, vol. 165, no. 3, 20 September 2005 (2005-09-20), pages 159-166, XP002690295,

## Description

### Technical Field

The subject of the invention is the method of selective extraction of uranium and protactinium from irradiated in a nuclear reactor materials containing thorium, with the use of a sequence method of two columns of column chromatography.

The invention can be utilised in nuclear power engineering for the aims of analysing thorium-uranium fuel cycle and marking in this fuel, both not used as well as burnt, the total content of uranium and its particular isotopes. It can be also utilised in the control of processes in nuclear reactors of the 4th generation in cases when thorium is used.

### Background Art

Uranium is formed in the course of nuclear reactions of thorium:

²³²Th + n ------ ²³³Th --------- ²³³Pa ----------- ²³³U

Up to now, for the aims of selecting uranium from thorium, liquid- liguid (solvent) extraction methods were used, which is a multi-level procedure, requiring use of a large amount of organic reagents and causes formation of a large amount of waste.

US 3 825 649 A, US 2 789 878 A and US 3 227 516 A are using solvent extraction methods for selectively extracting uranium and protactinium from materials containing thorium. In US 3 434 809 A the separation of actinium and thorium from uranium values is carried out by an ion exchange process using a cation exchange resin. In M. Solache-Rios Journal of Radioanalytical and Nuclear Chemistry, 2005, 165(3), 159-166, a combination of a solvent extraction process together with a ion-exchange process for the separation of Pa from carnotite is described.

The presented way is much simpler as in the whole process, only one medium is used, i.e. the same mixture of acids, and a sequence of two chromatographic columns is used. Such process is easy for automation, which is essential in case of processing radioactive substances.

### Summary of invention

The method of selective separation of uranium and protactinium from materials containing thorium, especially separating micro-amounts of uranium and protactinium from macro-amounts of other components containing thorium, especially ThO₂, consists in dissolving a sample containing U, Th and Pa using a mixture of nitric acid, hydrofluoric acid and Al(NO₃)₃ in a hermetically closed vessel, made of polytetrafluoroethylene or derivatives of Teflon (PTFE, PFA). Next, the vessel is closed and heated in the temperature of 40-120oC for minimum 1 hour, after which the obtained clear solution is put onto a chromatographic column, filled with trioctylphosphine oxide (TOPO) adsorbed on a hydrophobic sorbent, favourably polystyrene-divinylbenzene, and elution is conducted, favourably of 50 ml solution which is a mixture of nitric and hydrofluoric acids with an addition of aluminium nitrate (favourably THOREX) at the flow rate of 0.2-10 mL/300 s, while at the column, ²³³Pa is quantitatively retained and the eluate from the column which contains Th and U is quantitatively moved to a vessel made of polytetrafluoroethylene or its analogues (PTFE or PFA) and evaporated to the volume of 0.5-5mL. Next, we add 0.5-5mL of H₂O, and next, the obtained solution is put onto the column, filled with quaternary aliphatic amine and conduct an elution with a solution which is a mixture of nitric and hydrofluoric acids with an addition of aluminium nitrate with H₂O, at the eluent flow rate of 0.2-10 mL/300 s, collecting fractions of volumes of 0.1-10mL, selectively separating U and Th.

Uranium is eluted quantitatively in first five fractions, favourably four fractions (v=10 mL) and next, thorium in fractions 7-25 (v=39 mL).

### Brief description of drawings

The way of separating micro-amounts of uranium and protactinium from macro-amounts of other components, especially Th, consists in dissolving a sample containing U, Th and Pa using solution of 13M HNO₃ + 0.05 M HF + 0.1 M Al(NO₃)₃ in a hermetically closed vessel made of polytetrafluoroethylene or Teflon (PTFE, PFA). To 0.1 - 10 g of powdered ThO₂, we add 10 mL - 50 mL of solution of 13 M HNO₃ + 0.05 M HF + 0.1 M Al(NO₃)₃ (THOREX), close the vessel and heat in the temperature of 40-120°C, favourably 80°C for 1 to 24 hours, favourably for 1 hour. After that time, a clear solution is obtained.

Next, the obtained solution is put onto a chromatographic column filled with trioctylphosphine oxide (TOPO) adsorbed on a hydrophobic sorbent, favourably BioBeads SM2, (Φ=0.285-2 cm², h=0.5-15 cm), particularly (Φ =0.285 cm², h=6 cm). Next, elution of 5-500 mL, favourably 50 mL of THOREX solution is conducted, at the flow rate of 0.2-10 mL/300 s, favourably 1 mL/300 s. Quantitatively retained ²³³Pa remains on the column. The eluate from the column containing Th and U is quantitatively moved to a beaker, made of polytetrafluoroethylene or Teflon (PTFE or PFA) and evaporated on a hot plate under a fume hood, up to a volume of 0.5-5mL, favourably 1 mL, after which we add 0.5-5mL of H₂O, favourably 2mL H₂O, and next, the obtained solution is put onto the column, filled with quaternary aliphatic amine, favourably TEVA, (Φ=0.285-2 cm², h=0.5-15 cm) or (Φ = 0.285 cm², h=6 cm). Next, we conduct elution with the THOREX solution + H₂O, favourably THOREX + H₂O 1 + 2, with the eluent flow rate of 0.2 - 10 mL/300 s, favourably 1 mL/300 s, collecting fractions of volumes of 0.1-10mL, favourably 2.5 mL. Selective separation of U and Th is achieved. Uranium is eluted quantitatively in first five fractions, favourably four fractions (v=10 mL) and next, thorium in fractions 7-25 (v=39 mL).

Such elution sequence, when a desired component present in micro-amounts, i.e. U is eluted from the column at first, is very advantageous as there is no possibility of contaminating the uranium fraction, by a macro-component i.e. Th, caused by tailing. It is especially important as particular uranium isotopes are marked with the method of mass spectrometry, as it is necessary to avoid occurrence of isobaric interferences.

The method of the invention is presented in an execution example and at pictorial figures.

### Description of embodiments

### Example:

A sample containing U, Th and Pa is dissolved using solution of 13M HNO ₃ + 0.05 M HF + 0.1 M Al(NO₃)₃ in a hermetically closed vessel, made of polytetrafluoroethylene (PTFE). To 0.1 - 10 g of powdered ThO₂, we add 50 mL of solution of 13 M HNO₃ + 0.05 M HF + 0,1 M Al(NO₃)₃ (THOREX), close the vessel and heat in the temperature of 80°C for 1 hour. After that time, a clear solution is obtained.

Next, the obtained solution is put onto a chromatographic column filled with trioctylphosphine oxide (TOPO) adsorbed on a hydrophobic sorbent BioBeads SM2, (Φ=0.285 cm², h=6 cm). Next, elution of 50 mL of THOREX solution is conducted, at the flow rate of 1 mL/300 s. Quantitatively retained ²³³Pa remains on the column. The effluent from the column containing Th and U is quantitatively moved to a beaker, made of polytetrafluoroethylene and evaporated on a hot plate under a fume hood, up to a volume of 1 mL, after which we add 2mL of H₂O, and next, the obtained solution is put onto the column, filled with quaternary aliphatic amine TEVA ( = 0.285 cm², h=6 cm). Next, we conduct elution with the THOREX solution + H₂O 1 + 2, with the eluent flow rate of 1 mL/300 s, collecting fractions of volumes of 2.5mL. Selective separation of U and Th is achieved. Uranium is eluted quantitatively in first five fractions, favourably four fractions (v=12.5 mL) and next, thorium in fraction 7-25 (v=39 mL). Such elution sequence, when a desired component present in micro-amounts, i.e. U is eluted from the column at first, is very advantageous as there is no possibility of contaminating the uranium fraction, by thorium which is a macro-component, caused by tailing. It is especially important as particular uranium isotopes are marked with the method of mass spectrometry, as it is necessary to avoid occurrence of isobaric interferences.

The obtained results are pictorially presented in figures.

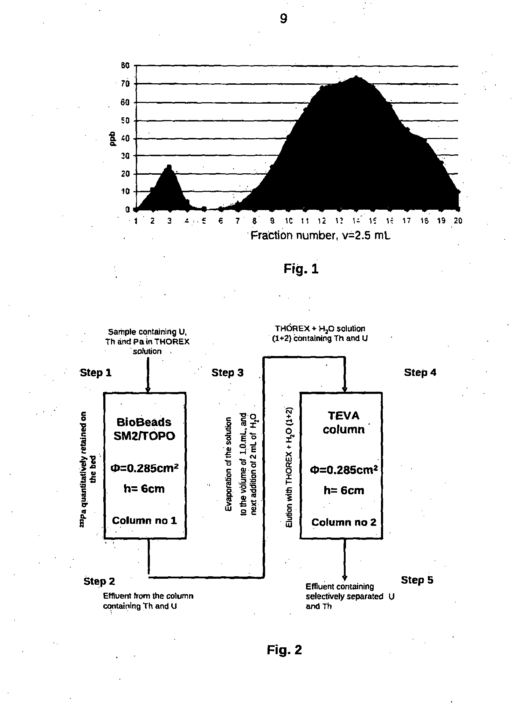

**Fig.1****.** Chromatogram of elution of U(VI) and Th(IV) in the arrangement TEVA resin (Φ = 0.285 cm², h=6 cm) - solution of 13M HNO₃ + 0.05 M HF + 0.1 M Al(NO₃)₃ in proportion 1:2. Horizontal axis represents the number of collected fractions of v=2.5mL, vertical axis - the content of U(VI) and TH(IV) in particular fractions, determined by the ICP-MS method. The volume of the solution containing U(VI) and Th(IV) (put onto the column) - 3mL, after a prior selective and quantitative extraction of Pa, conducted on column BioBeads SM2/TOPO (stage 1).
**Fig. 2****.** Diagram of selective and quantitative separation of uranium, protactinium and thorium, using two columns (column no 1 - BioBeads SM2 bed with TOPO of parameters: Φ = 0.285 cm², h=6 cm and column no 2 with TEVA resin, having parameters: Φ = 0.285 cm², h=6 cm). The separation process consists of five stages:
   - 1 - transferring the dissolved sample in solution of 13M HNO₃ + 0.05 M HF + 0.1 M Al(NO₃)₃, containing U, Th and Pa onto column no 1,
   - 2 - elution with solution of 3M HNO₃ + 0.05 M HF + 0.1 M Al(NO₃)₃, conducted on column no 1. Pa is selectively and quantitatively retained on the bed. In the course of elution, we obtain the solution containing Th and U.
   - 3 - evaporating in an evaporating dish, made of PTFE (or PFA), the solution obtained from column 1, up to the volume of 1 mL, and next, addition of 2 mL of H₂O.
   - 4 - transferring the solution obtained after evaporation and dissolving onto column no 2. Next, the process of separation is conducted on column no 2, using solution of 13M HNO₃ + 0.05 M HF + 0.1 M Al(NO₃)₃ + H₂O.
      selective and quantitative separation of U (IV) from Th (IV). Uranium is eluted in the first turn (first five fractions), and next thorium is eluted (remaining fractions). The volume of collected fractions is 2.5 mL.

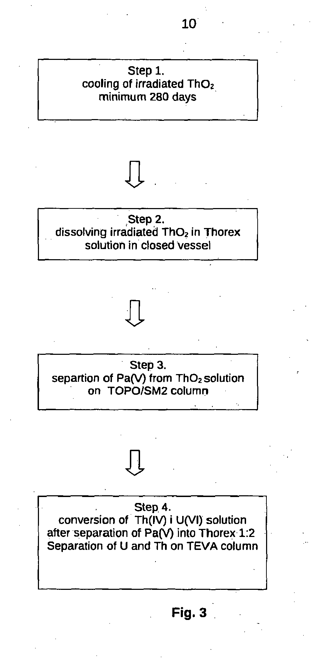

**Fig 3****.** Diagram of the procedure of separation of protactinium and uranium from thorium irradiated in a thermal neutrons flux. Consecutive procedure stages are presented.

## Claims

1. The method of selective separation of uranium and protactinium from materials containing thorium, especially separating micro-amounts of uranium and protactinium from macro-amounts of other components containing thorium, especially ThO₂, consists in dissolving a sample containing U, Th and Pa using a mixture of nitric acid, hydrogen fluoride and Al(NO₃)₃ in a hermetically closed vessel, made of polytetrafluoroethylene or derivatives of Teflon (PTFE, PFA), next, the vessel is closed and heated in the temperature of 40-120oC for minimum 1 hour, after which obtained clear solution is put onto a chromatographic column, filled with trioctylphosphine oxide (TOPO) adsorbed on a hydrophobic sorbent, favourably polystyrene-divinylbenzene, and elution is conducted, favourably of 50 ml solution which is a mixture of nitric and hydrofluoric acids with an addition of aluminium nitrate (favourably THOREX) at the flow rate of 0.2-10 mL/300 s, while at the column, ²³³Pa is quantitatively retains and the effluent from the column which contains Th and U is quantitatively moved to a vessel made of polytetrafluoroethylene or its analogues (PTFE or PFA) and evaporated to the volume of 0.5-5mL, and next, we add 0.5-5mL of H₂O, and obtained solution is put onto the column, filled with quaternary aliphatic amine and conduct an elution with a solution which is a mixture of nitric and hydrofluoric acids with an addition of aluminium nitrate with H₂O, at the eluent flow rate of 0.2-10 mL/300 s, collecting fractions of volumes of 0.1-10mL, selectively separating U and Th.

2. The method according to claim 1, **characterised in that** Th, consists in dissolving a sample containing U, Th and Pa using solution of 13M HNO₃ + 0.05 M HF + 0.1 M Al(NO₃)₃ in a hermetically closed vessel made of polytetrafluoroethylene or Teflon (PTFE, PFA). To 0.1 - 10 g of powdered ThO 2, we add 10 mL - 50 mL of solution of 13 M H NO₃ + 0.05 M HF + 0.1 M Al(NO₃)₃ (THOREX), close the vessel and heat in the temperature of 40-120° C, favourably 80°C for 1 to 24 hours, favourably for 1 hour, after that time, obtained solution is placed on a chromatographic column filled with trioctylphosphine oxide (TOPO) adsorbed on a hydrophobic sorbent, favourably BioBeads SM2, (Φ=0.285-2 cm², h=0.5-15 cm), particularly (Φ =0.285 cm², h=6 cm). Next, elution of 5-500 mL, favourably 50 mL of THOREX solution is conducted, at the flow rate of 0.2-10 mL/300 s, favourably 1 mL/300 s, quantitatively retained ²³³Pa remains on the column, while effluent from the column containing Th and U is quantitatively moved to a beaker, made of polytetrafluoroethylene or Teflon (PTFE or PFA) and evaporated on a hot plate under a fume hood, up to a volume of 0.5-5mL, favourably 1 mL, after which we add 0.5-5mL of H₂O, favourably 2mL H₂O, and next, the obtained solution is placed on the column, filled with quaternary aliphatic amine, favourably TEVA, (Φ=0.285-2 cm², h=0,5-15 cm) or (Φ = 0.285 cm², h=6 cm), and next, we conduct elution with the THOREX solution + H₂O, favourably THOREX + H ₂O 1 + 2, with the eluent flow rate of 0.2 - 10 mL/300 s, favourably 1 mL/300 s, collecting fractions of volumes of 0.1-10mL, favourably 2.5 mL, and there selective separation of U and Th is achieved where Uranium is eluted quantitatively in first five fractions, favourably four fractions (v=10 mL) and next, Thorium in fraction 7-25 (v=39 mL).

## Patentansprüche

1. Verfahren zur selektiven Trennung von Uran und Protactinium aus Materialien, die Thorium, insbesondere Trennmikro Mengen an Uran und Protactinium von Makro Mengen anderer Komponenten enthalten, Thorium, insbesondere ThO₂, besteht in der Auflösung einer Probe, die U, Th und Pa mit eine Mischung von Salpetersäure, Fluorwasserstoff und Al(NO₃)₃ in einem hermetisch geschlossenen Gefäß aus Polytetrafluorethylen oder Derivate von Teflon (PTFE, PFA), als nächstes, wird das Gefäß bei einer Temperatur von 40-120°C geschlossen und erhitzt, während mindestens 1 Stunde, nach dem eine klare Lösung erhalten wird, wird in eine chromatographische Säule gegeben, mit Trioctylphosphinoxid (TOPO) auf einem hydrophoben Sorbens adsorbiert, günstiger Polystyrol-Divinylbenzol, und Elution gefüllt durchgeführt wird, vorteilhaft von 50 ml Lösung, die eine Mischung von ist Salpetersäure und Fluorwasserstoffsäure, mit einem Zusatz von Aluminiumnitrat (positiv THOREX) bei einer Flussrate von 0,2-10 ml / 300 s, während die Säule ist 233Pa quantitativ zurückhält und der Ausfluß aus der Säule, Th und U enthält quantitativ bewegt wird in einen Behälter aus Polytetrafluorethylen oder dessen Analoga (PTFE oder PFA) und verdampft, um das Volumen der 0.5-5mL und als nächstes fügen wir 0.5-5mL H₂O und erhaltene Lösung wird auf die Säule gegeben, mit quaternären aliphatischen Amin und gefüllten Durchführung einer Elution mit einer Lösung, die eine Mischung aus Salpetersäure und Fluorwasserstoffsäure, mit einem Zusatz von Aluminiumnitrat mit H₂O ist, an der Fließgeschwindigkeit des Elutionsmittels von 0,2-10 ml / 300 s, Sammeln von Fraktionen von Volumina 0.1 - 10mL, selektiven Abtrennung U und Th.

2. Verfahren nach Anspruch 1, **dadurch gekennzeichnet**, Th, besteht in der Auflösung einer Probe, U, Th und Pa unter Verwendung einer Lösung von 13M HNO₃ + 0,05 M HF + 0,1 M Al(NO₃)₃ in einem hermetisch geschlossenen Gefäß aus Polytetrafluorethylen oder Teflon (PTFE, PFA). Um 0,1 bis 10 g pulverisiertem ThO₂, fügen wir 10 ml - 50 ml Lösung von 13 M HNO₃ + 0,05 M HF + 0,1 1 M Al(NO₃)₃ (THOREX), schließen Sie den Behälter und Wärme in einer Temperatur von 40-120°C, vorteilhaft 80°C für 1 bis 24 h, günstigerweise für 1 Stunde, nach dieser Zeit wird erhaltenen Lösung auf eine Chromatographiesäule mit Trioctylphosphinoxid (TOPO) auf einem hydrophoben Sorbens adsorbiert gefüllt ist, günstiger Biobeads SM2 (Φ = 0,285-2 cm2, h = 0,5-15 cm), insbesondere (Φ = 0,285 cm2, h = 6 cm). Als nächstes wird die Elution von 5-500 ml, vorteilhaft 50 ml THOREX Lösung durchgeführt wird, bei einer Flussrate von 0,2-10 ml / 300 s, bevorzugt 1 ml / 300 s, quantitativ zurückgehalten 233Pa bleibt auf der Säule, während der Ausfluß aus dem Säule mit Th und U wird quantitativ in ein Becherglas bewegt wird, aus Polytetrafluorethylen oder Teflon (PTFE oder PFA) und eingedampft, auf einer Heizplatte unter einem Abzug, bis zu einem Volumen von 0.5-5mL, bevorzugt 1 ml, nach dem wir fügen 0.5-5mL H₂O, günstigerweise 2 ml H₂O, und als nächstes wird die erhaltene Lösung auf die Säule gegeben, mit quaternären aliphatischen Amin, günstiger TEVA (Φ = 0,285-2 cm2, h = 0,5-15 cm) oder (gefüllte Φ = 0,285 cm2, h = 6 cm), und als nächstes führen wir Elution mit THOREX Lösung + H₂O, günstiger THOREX + H 20 1 + 2, mit der Fließgeschwindigkeit des Elutionsmittels von 0,2 - 10 mL / 300 s, bevorzugt 1 ml / 300 s, Sammeln von Fraktionen von Volumina 0.1-10mL günstiger 2,5 ml, und es selektive Trennung von U und Th erreicht, wo Uran wird quantitativ in ersten fünf Fraktionen eluiert, günstiger vier Fraktionen (v = 10 ml) und als nächstes wird Thorium in Fraktion 7-25 (v = 39 ml).

## Revendications

1. Procédé de séparation sélective de l'uranium et du protactinium à partir de matières contenant du thorium, en particulier la séparation des micro-quantités d'uranium et de protactinium à partir macro-quantités d'autres composants contenant du thorium, en particulier ThO₂, consiste à dissoudre un échantillon contenant U, Th et Pa en utilisant un mélange d'acide nitrique, du fluorure d'hydrogène et Al(NO₃)₃ dans un récipient hermétiquement fermé, en polytétrafluoroéthylène ou des dérivés de Téflon (PTFE, PFA), ensuite, le récipient est fermé et chauffé à la température de 40 à 120°C pendant au moins 1 heure, puis on obtient une solution claire est placé sur une colonne chromatographique remplie avec de l'oxyde de trioctylphosphine (TOPO) adsorbé sur un adsorbant hydrophobe, favorablement du polystyrène-divinylbenzène, et l'élution est réalisée, avantageusement de 50 ml d'une solution qui est un mélange de nitrique et d'acide fluorhydrique avec une addition de nitrate d'aluminium (favorablement Thorex) au taux de 0,2 à 10 ml / 300 s, tandis que l'écoulement à la colonne, est quantitativement 233Pa conserve et l'effluent de la colonne qui contient Th et U est déplacé quantitativement dans un récipient en polytétrafluoroéthylène ou de ses analogues (PTFE ou PFA) et évaporée au volume de 0.5-5mL, et ensuite, on ajoute 0.5-5mL de H₂O, et la solution obtenue est mise sur la colonne, remplie d'amine aliphatique quaternaire et procéder à une élution avec une solution qui est un mélange d'acides nitrique et fluorhydrique avec une addition de nitrate d'aluminium avec H₂O, à la vitesse d'écoulement de l'éluant de 0,2 à 10 ml / 300 s, en recueillant des fractions de volumes de 0.1-10mL, séparer sélectivement U et Th.

2. Procédé selon la revendication 1, **caractérisé en ce que** Th, consiste à dissoudre un échantillon contenant U, Th et Pa en utilisant une solution de HNO₃ 13M + 0,05 M + HF 0,1 M Al(NO₃)₃ dans un récipient hermétiquement fermé en polytétrafluoroéthylène ou en Téflon (PTFE, PFA). Pour 0,1 à 10 g de poudre de ThO₂, nous ajoutons 10 ml - 50 ml de solution de 13 M HNO₃ + 0,05 M HF + 0,1 1 M Al(NO₃)₃ (Thorex), fermer le récipient et la chaleur de la température de 40 -120°C, favorablement 80°C pendant 1 à 24 heures,favorablement pendant 1 heure, après ce moment, la solution obtenue est placée sur une colonne chromatographique remplie d'oxyde de trioctylphosphine (TOPO) adsorbé sur un adsorbant hydrophobe, BioBeads favorablement SM2, (Φ = 0,285 à 2 cm2, h = 0,5 à 15 cm), en particulier (Φ = 0,285 cm2, h = 6 cm). Ensuite, une élution de 5 à 500 ml, favorablement de 50 ml de solution Thorex est effectuée, à raison de 0,2 à 10 ml / 300 s, favorablement de 1 ml / 300 I débit quantitatif 233Pa reste retenu sur la colonne, tandis que l'effluent de la colonne contenant Th et U est déplacé quantitativement dans un bêcher, en polytétrafluoroéthylène ou en Téflon (PTFE ou PFA) et évaporée sur une plaque chauffante sous une hotte de laboratoire, jusqu'à un volume de 0.5-5mL, favorablement 1 ml, après quoi on ajoute 0.5-5mL de H₂O, favorablement 2 ml de H₂O, et ensuite, la solution obtenue est placée sur la colonne, remplie d'amine quaternaire aliphatique, favorablement TEVA, (Φ = 0,285 à 2 cm2, h = 0,5-15 cm) ou ( Φ = 0,285 cm2, h = 6 cm), et à côté, nous effectuons élution avec la solution Thorex + H₂O, favorable Thorex + H 20 1 + 2, avec le débit d'éluant de 0,2 à 10 ml / 300 s, favorablement 1 ml / 300 s, en recueillant des fractions de volumes de 0.1-10mL, favorablement 2,5 mL, et la séparation sélective de U et Th est atteint où l'uranium est élue quantitativement dans cinq premières fractions, favorablement quatre fractions (v = 10 ml) et ensuite, de thorium dans la fraction 25/07 (v = 39 ml).
